# EUROPEAN PATENT SPECIFICATION

(11) **EP 0 307 973 B1**
(45) Date of publication and mention of the grant of the patent: **03.11.1993**
(21) Application number: 88200725.5
(22) Date of filing: 23.08.1984
(51) Int. Cl.: G01N 27/00

(54) **An ISFET chip suitable to be used in an apparatus comprising a measuring circuit for selectively measuring ions in a liquid**
Ionenselektiver Feldeffekttransistor, der in einer Vorrichtung mit einer Messschaltungen zur selektiven Messung von Ionen in einer Flüssigkeit gebraucht werden kann
Transistor à effet de champ sensible aux ions pouvant être utilisé dans un appareil comportant un circuit de mesure pour mesurer sélectivement les ions dans un liquide

(30) Priority: 24.08.1983 NL 8302963; 16.08.1984 US 641911
(43) Date of publication of application: 22.03.1989
(62) Divisional of application: 84201154.6
(73) Proprietor: CORDIS EUROPA N.V., NL-9301 LJ Roden (NL)
(72) Inventor: Ligtenberg, Hendrikus Cornelis Geert, NL-9312 PZ Nietap (NL); Veld, Albertus, NL-9301 XS Roden (NL)
(74) Representative: Smulders, Theodorus A.H.J., Ir.

(56) References cited:
- EP-A- 0 043 284
- GB-A- 2 060 255
- US-A- 4 020 830
- US-A- 4 086 642
- US-A- 4 397 714
- US-A- 4 514 646

## Description

The present invention relates to an ISFET chip suitable to be used in an apparatus comprising a measuring circuit for selectively measuring ions in a liquid, said ISFET chip including a source and a drain diffused in bulk of the chip and provided with a source contact element and a drain contact element, as well as provided with means for protection of the ISFET from damage due to the presence of high voltages.

Such an ISFET chip is known from the Thesis of Rosemary Smith entitled "Ion Sensitive F.E.T. with Polysilicon Gates" at the University of Utah, June 1982. The high voltages referred to are due to electrostatic charges of the insulator gate material. It is proposed to apply to the gate insulator a conductive polysilicon layer which, via a Zener diode or a MOSFET switch is connected to the source electrode of the ISFET. The polysilicon layer should in turn be provided with an ion sensitive layer of material to be contacted with the liquid to be investigated. It has been found, however, that the proposed protection system limits the application of the sensor to situations where only fast changes in ion activity are to be monitored.

In US - A - 4,020,830 there is described an apparatus for measuring ions in a liquid using an ISFET. Said prior apparatus includes a measuring circuit and an ISFET immersed in a liquid for selectively measuring the ion activity in the liquid. Different ISFETs may be used for measuring different ion activities such as for example pH, pK, pNa.

Although the use of an ISFET in such a measuring apparatus has been found to be very useful for measuring ions, especially in the medical and biomedical field, such usefulness has some limitations in actual practice. In this respect, voltages that develop between the surface of the gate insulator of the ISFET and the underlying bulk material of the ISFET establish an electrical field in the gate insulator which may adversely affect the operation of the ISFET.

If this electrical field exceeds a maximum value, dielectrical breakdwon may occur in the gate insulator region and the ISFET may be damaged. When the gate insulator consists of a multi-layer system (for example of combinations of SiO₂ - Si₃N₄ or SiO₂ - Al₂O₃), an unduly strong electrical field may produce still another effect, namely a shift in the threshold voltage of the ISFET, which may be permanent or which is only corrected after a long period of time. This results in the apparatus being permanently or temporarily out of order since the calibration of the apparatus is now incorrect.

The said electrical field may be the result of electrostatic voltages generated during the manufacture of the ISFET sensor or during use of the apparatus in practice. The said electrical field also may be created by external influences or effects such as, for example, from electrosurgical apparatus, heart defibrillation apparatus, electromagnetic influences resulting from switching inductive elements on or off.

From US-A-4,086,642 it is known to protect an insulator for a gate of metal-oxide-semiconductor (MOSFET) from high voltages to be applied to the metal gate. Hereto a protecting circuit is applied through which an element with a high impedance to low voltages and a low impedance to high voltages in parallel with the measuring circuit. It is to be emphasized that the said field effect transistor to be protected with a protection circuit is a MOSFET. A MOSFET cannot be put on a level with an ISFET as to its characteristic properties due to the fact that an ISFET doesnot include a metal gate.

In accordance with the above it is an object of the invention to prevent the establishment of such an electrical field causing dielectrical breakdown of the gate insulator of an ISFET.

According to the invention there is provided an ISFET chip of the type mentioned in the opening paragraph and characterized by having as the protection means an electrode on the chip closely adjacent to the gate region of the ISFET, said electrode taking the form of a metallic ring applied around the gate region of the ISFET.

According to an elaboration of the invention said electrode is connected to a diode and/or MOSFET arranged on the chip which are adapted to become conductive outside the operative range of the ISFET.

According to another elaboration of the invention said electrode is coupled to said ISFET by two diodes connected in anti-series (in reverse polarity to each other).

The protective system according to the invention offers adequate protection from the occurrence of electrostatic voltages as may occur during the manufacture of the ISFET sensor or also during the ise of the apparatus in practice. Moreover the protection offered by the invention is effective in combination with all types of housings of the ISFET sensor, for example, in the case of catheter tip sensors, current cells and other type of housings.

The invention will be described in more detail with reference to the drawings. In said drawings,
Fig.1 is a plan view of an ISFET chip according to the invention including a protection electrode;
Fig 2 is a schematic circuit diagram of circuitry for a measuring apparatus adapted to use an ISFET chip according to the invention for measuring ions in a liquid;
Fig. 3 is a perspective view of one embodiment of the measuring apparatus shown schematically in Fig. 2 including a catheter mounting an ISFET chip according to the invention;
Fig. 4 is a graph of current versus voltage that shows the current to an ISFET and a protection diode when a diode is used in the protection system of the present invention;
Figs.5a and 5b are schematic circuit diagrams of the series connections of two diodes having reverse polarity to each other, which can be referred to as anti-series diodes and which can form part of the protection means of the present invention.

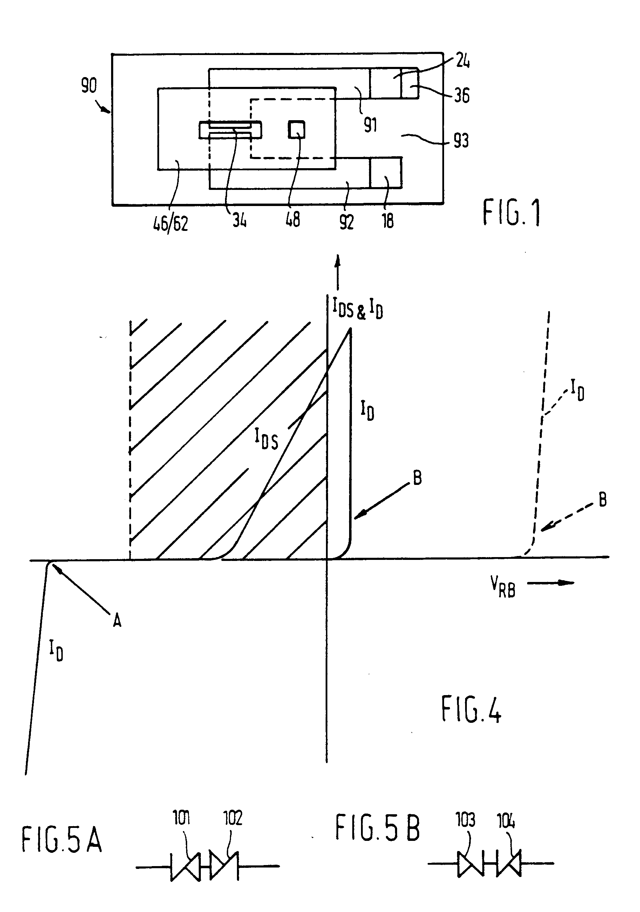

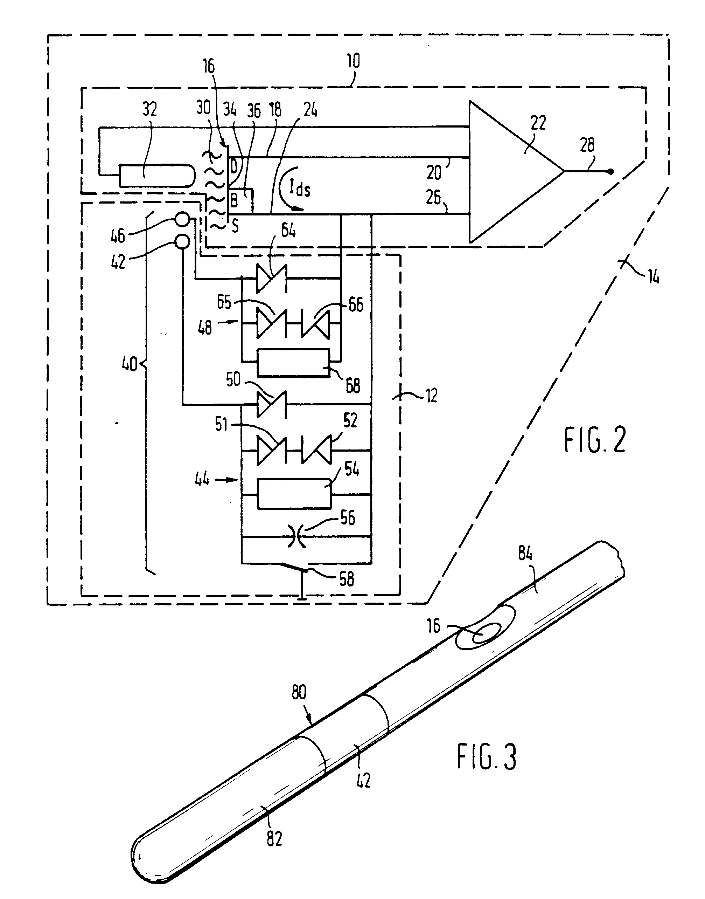

Referring now to the drawings in greater detail, there is illustrated in Fig.1 a plan view of a chip 90 containing the ISFET 16 which can be mounted in housing portion 84 of catheter 80, shown in Fig. 3 The chip 90 includes a source 91 and a drain 92 diffused in bulk 93 of the chip 90 and provided with a source bulk contact element 24,36 and a drain contact element 18. A protective electrode 46 is realized by an aluminum ring 62 which is electrically connected to a protective circuit 48 (Fig.2) which is diffused in the bulk 93 of the ISFET chip 90. The protective electrode 46/aluminum ring 62 is applied around the gate region 34 on the chip 90. It will be clear that any useful current conducting material may be used for manufacturing the protective electrode 46 such as polysilicon.

In Fig. 2 there is schematically illustrated a measuring circuit 10 including a protection system 12 for a measuring apparatus 14 (Figs. 1,2 and 3) constructed according to the teachings of the invention.

The circuit 10 includes an ion-sensitive field effect transistor (ISFET or ISFET sensor) 16 having a drain 18 coupled to one input 20 of an amplifier 22 and a source 24 coupled to another input 26 of the amplifier 22 which has an output 28 that has an output signal indicative of the concentration of ions in a liquid (such as blood) 30.

Further, the circuit 10 includes a reference electrode 32 which applies a reference voltage to liquid 30 so that the gate region 34 is electrically connected to the amplifier 22, thus enabling control of the drain-source current I_{DS} of the ISFET 16 in a manner similar to that used with MOSFET's The voltage that is experienced by the ISFET, consists of a portion that is dependent on the ion activity in the liquid to which the ISFET is specifically sensitive, and of the externally applied voltage V_{RB}. A change in ion concentration gives rise to a change in drain-source current. This change in drain-source current can be compensated for by adjusting the externally applied voltage V_{RB}. The relationship between ion activity and the developed voltage is known. Therefore it follows that from the correction of V_{RB} the change in ion concentration can be calculated. The amplifier measures the drain-source current constantly and corrects V_{RB} for changes in that current in order to keep it constant. The output voltage of the amplifier is proportional to the changes in V_{RB}.

In accordance with the teachings of the present invention, a protection system or guard circuit 40 is coupled between the source 24 and the liquid 30 and includes a protective electrode 46 coupled to the source 24 through a first protection circuit 48 and a second electrode 42 coupled to the source 24 through a second protection circuit 44 both having a high resistance to low voltages and a low impedance to high voltages. The second electrode 42 is preferably made of metal, for example, of stainless steel having good blood compatibility, or of titanium. In other words, the second electrode 42 should be made of a conductive material having good blood compatibility and having a surface area sufficiently large to provide a low-impedance contact with the liquid 30 when the ISFET 16 and reference electrode 32 are immersed into the liquid 30 being investigated.

The protective electrode 46 is coupled by one or more protective elements in protection circuit 48, such as by a diode 64, two bucking or reverse polarity series connected diodes 65,66, and/or a MOSFET 68 which become conductive outside the operative range of the ISFET 16, for example, a Zener diode or an avalanche diode or a MOSFET having a high treshold voltage to the measuring circuit.

The second electrode 42 serves to protect the ISFET 16 from high A.C. voltages which occur, for example, with the use of an electrosurgical apparatus. For this purpose, the second electrode 42 is coupled to the source 24 by one or more protective elements in the protection circuit 44, such as by a diode 50, two bucking or reverse polarity series connected diodes 51, 52 and/or a MOSFET 54, which become conductive outside the operative range of the ISFET 16, for example, a Zener diode or an avalanche diode or a MOSFET having a high threshold voltage to the measuring circuit, and/or a capacitor 56. Also, the second electrode 42 can be coupled to the source 24 by a mechanical switch 58 serving as a protective element. The protective elements 50-58 can, of course, be coupled to any contact which is in a low-impedance connection with the source 24 of the ISFET 16, for example, the drain 18 or bulk contact 36.

The choice for a protective element according to the teachings of the present invention is based on the condition that any leakage current which may be present within the operative range of the ISFET 16 gives rise to a shift in the reference electrode potential equal to the product of leakage current and impedance. This shift contributes to the voltage that is experienced by the ISFET 16 and accordingly has a negative effect on the accuracy of the measurement, which becomes unacceptable if the leakage current comes to be in excess of an acceptable limit, for example, is more than 10nA. Therefore, within the operative range of the ISFET 16, the DC currents which may pass through the protective elements should accordingly be kept below the acceptable limit.

The diodes 50,51,52,64,65 and 66 or MOSFET's 54,68 which become conductive outside the operative range of the ISFET 16, to be used according to the teachings of the present invention, have a breakdown voltage lower than the voltage in which the damage causing effects occur. The protective electrode 46, thus connected to the measuring circuit 10, provides protection of the ISFET sensor 16 from electrostatic voltages, which may occur during manufacture of the sensor 16 or also during use thereof.

When the apparatus 14 is being used at the same time that electrosurgery is being utilized, it is possible that a pulsating direct current will flow through the circuit formed by the reference electrode 32, the liquid 30, the electrode 46, the protective elements 64 and/or 68, the ISFET 16 and the amplifier 22 of the apparatus 14. This current will influence the reference electrode 32 potential and also lead to the occurrence of a Coulometric effect and accordingly, will effect the pH of the liquid 30 to be measured. This problem may be overcome by coupling the protective electrode 46 into the circuit of the apparatus 14 with the two diodes 65, 66 connected in series with reverse polarity. The same approach is valid for protective circuit 48.

Also, when the protective element is diode 64, MOSFET 68 and/or the diodes 65,66, these elements can be used in combination for both the first and the second electrode and may be arranged on the ISFET chip.

In the choice of a capacitor 56 it is important that the capacitance of the capacitor 56 is sufficiently high in order that the impedance may be low enough for the frequency of the spurious A.C. voltage applied, for example, that applied in electrosurgical operations. A capacitance of 100 nF or more is generally satisfactory for this purpose.

If desired, the capacitor 56 may be included in the amplifier 22.

When the mechanical switch 58 is used, it is effective to use a relay switch (not shown) for this purpose, which is activated by the source of interference and is maintained in the activated state for the time the interference lasts.

For example, in an apparatus 14 the protection system or guard circuit 40 can be constructed so that the second electrode 42 is connected to the capacitor 56 and the protective electrode 46 is connected to the diode 64, the MOSFET 68 and/or the diodes 65,66.

As shown in Fig.3 , the apparatus 14 can be mounted in a catheter 80 where the reference electrode 32 is mounted in a terminal or tip part 82. The second electrode 42 is then realized by a metallic ring 42 spaced slightly rearwardly of the tip part 82. The ring electrode 42 has a surface area of about 1 cm² which provides a low-impedance contact with the liquid 30 (Fig. 2) in which the catheter 80 is to be immersed. The ring 42 can be electrically connected to a terminal on the ISFET chip (90-Fig. 1)) through a polypropylene capacitor 56 having a capacitance of 100 nF, which in this case is included in the ISFET amplifier circuit. The ISFET sensor 16 is housed or mounted by an epoxy resin within a housing portion 84 of the catheter 80 located rearwardly of the ring electrode 42.

In the graph shown in Fig. 4, the potential V_{RB} of the reference electrode 32 relative to the bulk 36 of the ISFET 16 is plotted along the horizontal axis, and the current intensity along the vertical axis with I_{D} being the diode current and I_{DS} being the drain-source current. The hatched area in the graph represents the operative range of the ISFET sensor 16. The letter A designates the point of diode breakdown and the letter B represents the diode pass characteristic.

As stated above, the protective element can be a combination of two diodes (51, 52 or 65, 66) connected in anti-series or reverse polarity to each other. Such diodes may be two Zener diodes 101, 102 in a connection as represented in Fig. 5a or two Zener diodes 103, 104 in a connection as represented in Fig. 5b. With such protective elements, the graph of I_{D} shown in Fig. 4 is modified to the graph of I_{D} shown in phantom in Fig. 4.

The protection system or guard circuit 40 using an ISFET chip according to the teachings of the present invention offers adequate protection from the occurrence of electrostatic voltages as may occur during the manufacture of the ISFET sensor 16 or also during use of the apparatus 14 in practice.

The protection system or guard circuit 40 also offers adequate protection from external effects or influences resulting from electromagnetic sources of interference which may be encountered in the biomedical and industrial fields, for example, in cases in which the ISFET sensor 16 and apparatus 14 is used in cooperation with electrosurgical apparatus or heart defibrillation apparatus. Moreover, the protection offered by the guard circuit 40 according to the present invention is effective in combination with all types of housings of the ISFET sensor 16, for example, the case of catheter tip sensors, flow cells and other types of housings.

## Claims

1. An ISFET chip (90) suitable to be used in an apparatus comprising a measuring circuit for selectively measuring ions in a liquid, said ISFET chip including a source (91) and a drain (92) diffused in bulk (93) of the chip (90) and provided with a source contact element (24) and a drain contact element (18), as well as provided with means for protection of the ISFET from damage due to the presence of high voltages, characterized by having as the protection means an electrode (62) on the chip (90) closely adjacent to the gate region (34) of the ISFET, said electrode (62) taking the form of a metallic ring applied around the gate region (34) of the ISFET.

2. The ISFET chip according to claim 1, characterized in that, said electrode (62) is connected to a diode (64) and/or MOSFET (68) arranged on the chip (90) which are adapted to become conductive outside the operative range of the ISFET.

3. The ISFET chip according to claim 2, characterized in that, said electrode (62) is coupled to said ISFET by two diodes (65,66) connected in anti-series, i.e. in reverse polarity to each other.

## Patentansprüche

1. ISFET-Chip (90), geeignet dazu, in einer Vorrichtung mit einem Meßschaltkreis zum selektiven Messen von Ionen in einer Flüssigkeit verwendet zu werden, wobei der ISFET-Chip eine Source-Elektrode (91) und eine Drain-Elektrode (92) umfaßt, die in den Körper (93) des Chips (90) diffundiert und mit einem Source-Kontaktelement (24) und einem Drain-Kontaktelement (18) versehen sind, und auch mit einer Einrichtung für den Schutz des ISFET vor Beschädigung aufgrund des Anliegens hoher Spannungen versehen ist, gekennzeichnet durch Aufweisen einer Elektrode (62) als der Schutzeinrichtung auf dem Chip (90) dicht benachbart dem Gate-Bereich (34) des ISFET, wobei die Elektrode (62) die Form eines metallischen Ringes einnimmt, der um den Gate-Bereich (34) des ISFET gelegt ist.

2. ISFET-Chip nach Anspruch 1, dadurch gekennzeichnet, daß die Elektrode (62) mit einer Diode (64) und/oder einem MOSFET (68), angeordnet auf dem Chip (90), verbunden ist, welche so ausgelegt sind, daß sie außerhalb des Betriebsbereiches des ISFET leitend werden.

3. ISFET-Chip nach Anspruch 2, dadurch gekennzeichnet, daß die Elektrode (62) an den ISFET über zwei Dioden (65, 66) gekoppelt ist, die gegeneinander in Reihe geschaltet sind, d.h. mit umgekehrter Polarität gegeneinander.

## Revendications

1. Transistor à effet de champs sensible aux ions (ISFET) pouvant être utilisé dans un appareil comportant un circuit de mesure pour mesurer selectivement les ions dans un liquide, ledit ISFET comportant une source (91) et un drain (92) diffusés dans la masse (93) de la puce (90) et comportant un élément de contact de source (24) et un élément de contact de drain (18), ainsi que des moyens de protection de l'ISFET contre les dommages dus à la présence d'une haute tension caractérisé par le fait que.les moyens de protection sont constitués par une éléctrode (62) sur la puce(90) au voisinage immédiat de la zone de la porte (34) de l'ISFET, ladite éléctrode (62) prenant la forme d'un anneau métallique disposé autour de la zone de porte (34) de l'ISFET.

2. Transistors ISFET selon la revendication 1 caractérisés par le fait que ladite éléctrode (62) est reliée à une diode (64) et/ou un MOSFET (68) disposés sur une puce (90), qui sont adaptés pour devenir conducteurs en dehors de la plage de fonctionnement de l'ISFET.

3. Transistor ISFET selon la revendication 2 caractérisé par le fait que ladite éléctrode (62) est reliée audit ISFET par deux diodes (65,66) reliées entre elles en opposition c'est à dire avec des polarités opposées.
